# EUROPÄISCHE PATENTANMELDUNG

(11) **EP 2 813 343 A1**
(43) Veröffentlichungstag der Anmeldung: **17.12.2014**
(21) Anmeldenummer: 13171998.1
(22) Anmeldetag: 14.06.2013
(51) Int. Cl.: B29C 47/12, G01N 11/00, G01N 33/00, B29C 47/92

(54) **Messvorrichtung zur Bestimmung des Fließverhaltens von hochviskosen Massen**

(71) Anmelder: HÄNDLE GmbH Maschinen und Anlagenbau, 75417 Mühlacker (DE)
(72) Erfinder: Rank, Christian, 88048 Friedrichshafen (DE)
(74) Vertreter: Riedel, Peter

(57) **Zusammenfassung**

Bei einer Messvorrichtung (1) zur Bestimmung des Fließverhaltens von viskoplastischen Massen, insbesondere von keramischen Massen, Lebensmittel-Teig, Klebstoffen oder Kohlestoffschmelzen, die im Strangpressverfahren durch ein Extrusionswerkzeug, insbesondere Mundstück, zur Herstellung von plastisch verformten Körpern gepresst sind, bestehend aus einem Messkörper (2), in dem ein sich in Längsrichtung (3) des Messkörpers (2) erstreckender und im Querschnitt rechteckförmig ausgestalteter Durchlasskanal (4) vorgesehen ist, in den mindestens ein Messsensor (5, 6) einmündet, der mit den in den Durchlasskanal (4) eingeschobenen Massen zur Vermittlung von Messwerten kommuniziert, sollen mit der Messvorrichtung (1) innerhalb einer kurz bemessenen Zeitdauer absolute Messwerte in Sl-Einheiten zur Extrusion der eingeführten Materialien bzw. Massen ermittelbar sein.

Die ist dadurch erreicht, dass mindestens eine der Seitenwände (9 und/oder 10) des Durchlasskanals (4) durch eine Messplatte (11, 11') gebildet ist, dass der Durchlasskanal (4) durch die Messplatte (11, 11') in Richtung der Austrittsöffnung (13) des Durchlasskanals (4) verjüngt ist und dass der Abstand mindestens einer der Messplatten (11, 11') in Richtung der Längsachse (3) des Durchlasskanals (4) variabel veränderbar ist.

## Beschreibung

Die Erfindung bezieht sich auf eine Messvorrichtung zur Bestimmung des Fließverhaltens von hochviskosen Massen, insbesondere von keramischen Massen und dgl., nach dem Oberbegriff des Patentanspruches 1.

Es ist zwar bekannt, für eine Vielzahl von Fluiden, Gasen oder sonstigen Medien eine Messvorrichtung zur Verfügung zu stellen, um das Fließverhalten, die Strömungsverhältnisse, Wandreibungen und sonstige Parameter des zu messenden Mediums zu ermitteln, wenn jedoch viskoplastische Massen zu verarbeiten sind, die beispielsweise im Strangpressverfahren durch ein Extrusionswerkzeug zur Herstellung von dreidimensionalen Körpern mit einer bestimmten Formstabilität gedrückt sind, dann existieren solche Messvorrichtungen bislang nicht. Vielmehr ist jedes Extrusionswerkzeug, insbesondere die Geometrie, die Wandstärken der Quer- und Längsbügel des Extrusionswerkzeuges sowie deren Oberflächenbeschaffenheit an diese viskoplastischen Massen mittels Experimenten und Fachwissen anzupassen, wobei diese Anpassungen herkömlicherweise durch Praxistests zu überprüfen sind. Eine vorherige exakte und physikalisch nachprüfbare Berechnungsmethode zur Bestimmung, welche Extrusionswerkzeuge für die Verarbeitung der jeweiligen Masse geeignet sind, zur Zeit nicht bekannt ist.

Es ist daher Aufgabe der Erfindung, eine Messvorrichtung der eingangs genannten Gattung zur Verfügung zu stellen, mittels der innerhalb einer kurz bemessenen Zeitdauer absolute Messwerte in SI-Einheiten zur Extrusion der eingeführten Materialien bzw. Massen ermittelbar sind und mittels der das Wandgleiten der eingepressten Materialien feststellbar ist, so dass auf der Grundlage der erhaltenen Messwerte physikalisch nachvollziehbare Kenngrößen für das Fließverhalten der eingeführten Materialien errechenbar sind, durch die die Geometrien und Materialeigenschaften bzw. Oberflächenstrukturen von Extrusionswerkzeugen, insbesondere von Mundstücken, durch die die Materialien in Realität gepresst sind, konstruiert werden können. Die Messvorrichtung soll zudem einfach zu handhaben sein und unterschiedliche Querschnittsstrukturen der Messvorrichtung soll schnell einstellbar sein, und zwar ohne dass geometrische Kalibrierungen notwendig sind.

Diese Aufgabe ist durch die Merkmale des kennzeichnenden Teils von Patentanspruch 1 gelöst.

Weitere vorteilhafte Weiterbildungen der Erfindung ergeben sich aus dem Unteransprüchen.

Dadurch, dass mindestens eine der Seitenwände des Durchlasskanales durch eine Messplatte gebildet ist, durch die der Durchlasskanal in Richtung der Austrittsöffnung verjüngt ist, kann vorteilhafterweise eine Querschnitts-Struktur oder -Geometrie des Durchlasskanales eingestellt werden, die den Geometrien und Materialbeschaffenheiten von Extrusionswerkzeugen nachempfunden ist. Dies wird zudem auch dadurch erreicht, dass der Abstand mindestens einer der Messplatten in Richtung der Längsachse des Durchlasskanals variabel veränderbar ist und dass die Steigung mindestens einer der Messplatten bezogen auf die Längsachse des Durchlasskanales in unterschiedliche Neigungswinkel einstellbar ist. Durch diese konstruktiven Maßnahmen können mit Hilfe der in den Durchlasskanal einmündenden Messsensoren die Druck- und/oder Temperaturwerte der eingepressten Massen an unterschiedlichen Positionen festgestellt werden, wodurch sich physikalisch nachprüfbare Berechnungsmodelle entwickeln lassen, auf deren Grundlage die Geometrie, Material- und Oberflächenbeschaffenheit von Extrusionswerkzeugen errechenbar ist.

Folglich kann mit Hilfe der erfindungsgemäßen Messvorrichtung ein Berechnungsmodell zur Verfügung gestellt werden, durch das das Fließverhalten von viskoplastischen Massen oder Materialien ermittelbar ist und womit anschließend die Geometrie und die Materialbeschaffenheit von Extrusionswerkzeugen zur Verarbeitung solcher Massen errechnet werden kann.

Es ist besonders vorteilhaft, wenn der Messkörper aus zwei gegenüberliegenden Seitenwänden gebildet ist, die im montierten Zustand einen vorgegebenen und konstanten Abstand zueinander einnehmen, wenn zwischen den beiden Seitenwänden zwei zueinander beabstandete Abdeckplatten angeordnet sind, die mit Hilfe von mindestens zwei Spannstiften zwischen den beiden Seitenwänden verspannt gehalten sind, wenn jeweils eine der Abdeckplatten einer der Messplatten zugeordnet ist, die über Passstifte an der Abdeckplatte gehalten sind und wenn die beiden Seitenwände mindestens zwei senkrecht von diesen abstehende Passstifte aufweisen, die jeweils in eine in einem Ringgehäuse eingearbeiteten Aufnahmeöffnungen im montierten Zustand eingesetzt sind, da durch diese konstruktiven Maßnahmen die Messvorrichtung unkompliziert und schnell aufgebaut werden kann und die Messplatten austauschbar sind, ohne dass eine erneute Kalibrierung der Messplatten bezogen auf eine vorherige Einstellung zu erfolgen hat. Die Position der Messplatten und der Abdeckplatten ist nämlich durch die Position des Ringgehäuses und die Anlenkung der Abdeckplatten bzw. Messplatten über einen Gelenkflansch an dem Ringgehäuse exakt vorgegeben. Demnach kann jede Messplatte in eine vorgegebene und bekannte Position im Bereich der Eintrittsöffnung angeordnet werden, wodurch sich der Eintrittsquerschnitt des Durchlasskanales einstellen lässt, die Positionen der Messplatte jedoch vorgegeben ist.

Im Bereich der Austrittsöffnung des Durchlasskanales ist ein Rahmengestell vorgesehen, durch das der Abstand der Abdeckplatten und der Messplatten bezogen auf die Längsachse des Durchlasskanales einstellbar ist, so dass sich dadurch die Neigung der Messplatten in Verbindung mit der gewählten Anordnung der Messplatte im Bereich der Eintrittsöffnung des Durchlasskanales ergibt. Das Rahmengestell weist dabei zwei senkrecht in Richtung des Durchlasskanals abstehende Auflagestege auf, durch die die Messlatten fixiert sind. Unterschiedliche Rahmengestelle können demnach an die Messvorrichtung angebaut werden, so dass hierdurch die Neigung der Messplatten und der Durchtrittsquerschnitt der Austrittsöffnung des Durchlasskanales einstellbar ist.

Folglich können durch eine Vielzahl von unterschiedlichen Positionen, Durchtrittsquerschnittsgeometrien des Durchlasskanals und der Oberflächenflächenbeschaffenheit der Messplatten entsprechende unterschiedliche Messsituationen erzeugt werden, wodurch eine Vielzahl von Messergebnissen für jede beliebige viskoplastische Masse ermittelbar ist. Auf der Grundlage solcher Messergebnisse können anschließend mit Hilfe von physikalisch nachprüfbaren Berechnungsmodellen die Geometrien, die Material- und Oberflächenbeschaffenheiten von Extrusionswerkzeugen für die zu verarbeitenden viskoplastischen Massen errechnet werden. Somit sind keine zeit- und kostenaufwendigen Experimente erforderlich, um eine Anpassung der zu verarbeitenden viskoplastischen Massen an die einzusetzenden Extrusionswerkzeuge zu erreichen.

In der Zeichnung sind zwei erfindungsgemäße Ausführungsbeispiele dargestellt, die nachfolgend näher erläutert sind. Im Einzelnen zeigt:
- Figur 1a: eine erste Ausführungsvariante einer Messvorrichtung mit zwei gegenüberliegenden Seitenwänden, zwischen denen beabstandet zueinander zwei Abdeckplatten eingespannt sind, an denen zwei Messplatten angebracht sind, durch die ein Durchlasskanal zusammen mit den Seitenwänden gebildet ist, in Explosionsdarstellung,
- Figur 1b: die Messvorrichtung gemäß Figur 1 a im zusammenbauten Zustand und in perspektivischer Ansicht,
- Figur 2a: die Messvorrichtung gemäß Figur 1 b im Längsschnitt und in einer vorgegebenen Einstellsituation der Messplatten, wobei die Eintritts- und Austrittsöffnung des Durchlasskanals die größtmögliche Querschnittsöffnung aufweist,
- Figur 2b: die Messvorrichtung gemäß Figur 1 b im Längsschnitt und in einer vorgegebenen Einstellsituation der Messplatte, wobei die Eintrittsund Austrittsöffnung des Durchlasskanals die kleinstmögliche Querschnittsöffnung aufweist,

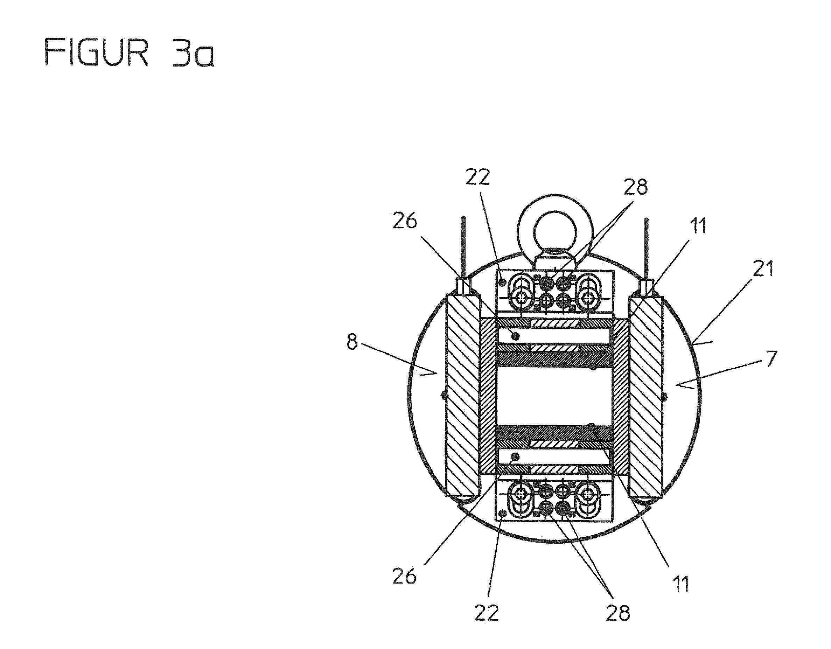

- Figur 3a: die Messvorrichtung gemäß Figur 2a entlang der Schnittlinie IIIa-IIIa,

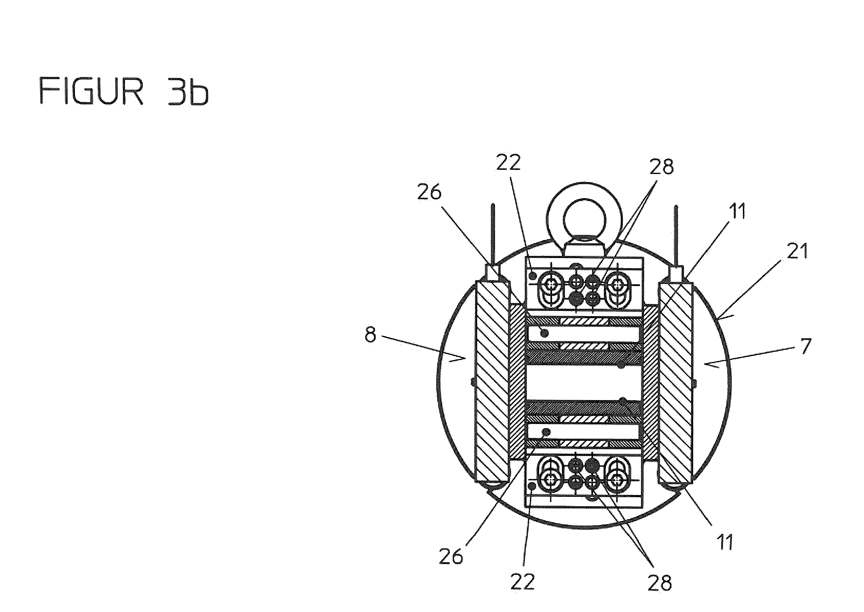

- Figur 3b: die Messvorrichtung gemäß Figur 2b entlang der Schnittlinie IIIb-Illb,
- Figur 4a: die Messvorrichtung gemäß Figur 2a entlang der Schnittlinie IVa-IVa,
- Figur 4b: die Messvorrichtung gemäß Figur 2b entlang der Schnittlinie Vb-Vb,
- Figur 5a: ein zweites Ausführungsbeispiel einer Messvorrichtung mit oberen und unteren Abdeckplatten sowie zwei seitlichen Seitenwänden und den Abdeckplatten zugeordneten Messplatten, durch die ein Durchlasskanal konisch verjüngt eingeschlossen ist, in einer größmöglichen Einstellungslage für die Eintritts- und Austrittsöffnungen des Durchlasskanales und
- Figur 5b: die Messvorrichtung gemäß Figur 5a mit einem Durchlasskanal, der im Bereich der Eintritts- und Austrittsöffnung die kleinstmögliche Durchtrittsöffnung durch unterschiedlich angestellte Messplatten aufweist.

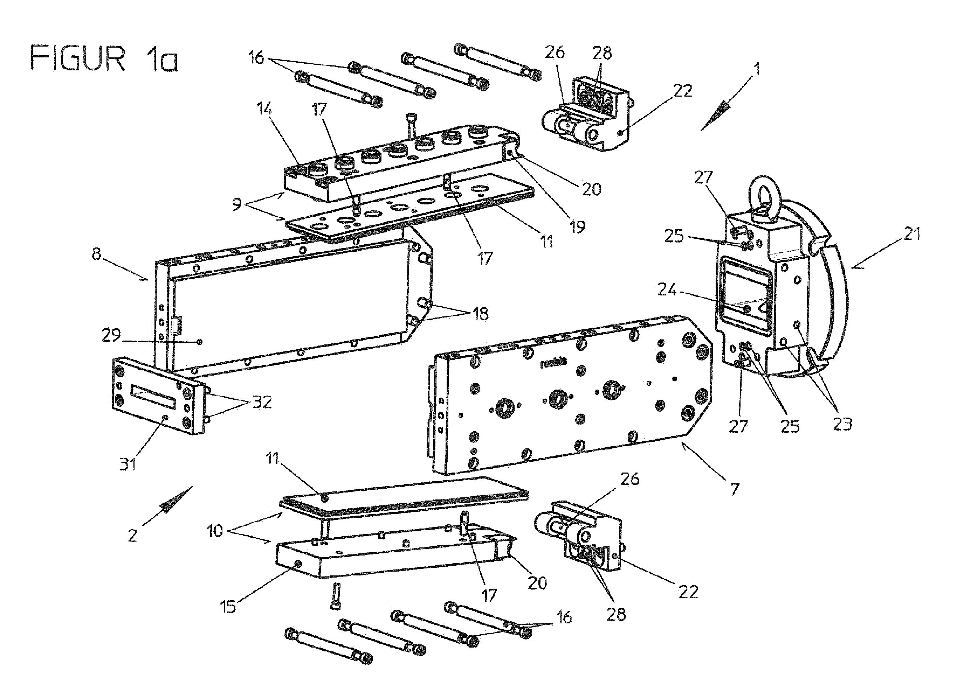

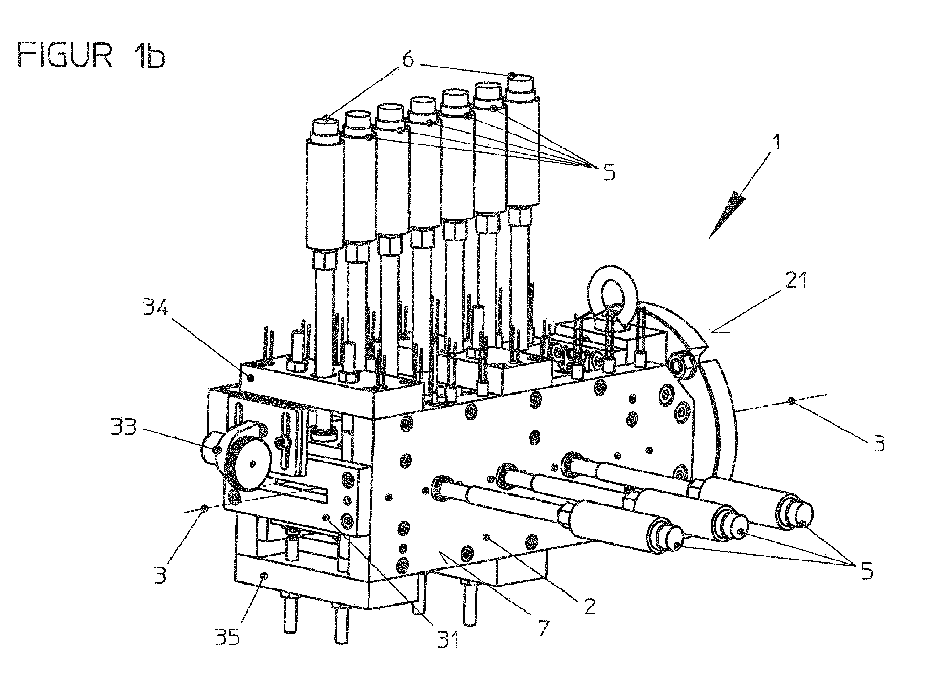

In den Figuren 1 a und 1b ist eine Messvorrichtung 1 zu entnehmen, durch die das Fließverhalten von viskoplastischen Massen in Abhängigkeit von sich veränderten Geometrieverhältnissen im Inneren der Messvorrichtung 1 feststellbar sein soll.

Die Messvorrichtung 1 umfasst einen Messkörper 2, in dessen Längsachse 3 ein sich in Richtung der Austrittsöffnung 13 konisch verjüngender Durchlasskanal 4 vorgesehen ist, der über seine gesamte Länge einen rechteckförmigen Querschnitt aufweist.

Der Messkörper 2 besteht aus zwei seitlich verlaufenden Seitenwänden 7 und 8, die beabstandet und parallel zueinander verlaufen und an denen jeweils eine Anformung 29 angearbeitet ist, durch die der Durchlasskanal 4 seitlich begrenzt ist. Zwischen den Seitenwänden 7 und 8 ist eine obere und untere Abdeckplatte 9 bzw. 10 vorgesehen. Durch den oberen und unteren Abschluss des Durchlasskanales 4 wird eine Messplatte 11 gebildet. Diese oberen und unteren Seitenwände 9, 10 bestehen folglich aus den Abdeckplatten 14 oder 15, einer an dieser angebrachten Messplatte 11 sowie jeweils einer Druckplatte 34 oder 35. Die jeweilige Messplatte 11 ist mittels Passstiften 17 an der oberen bzw. unteren Abdeckplatte 14, 15 gehalten und demnach auswechselbar, ohne dass der Austausch eine erneute Kalibrierung erfordert, da jede Messplatte 11 in einer exakt identischen Position an der Abdeckplatte 14 oder 15 arretiert ist.

In die von der Abdeckplatte 14 der Druckplatte 34 und der Messplatte 11 gebildeten oberen Seitenwand 9 sind sieben Öffnungen eingearbeitet, in die drei Druckmesssensoren 5 und zwei Temperatursensoren 6 eingesetzt sind, die mit den in dem Durchlasskanal 4 vorgesehenen Massen kommunizieren. In die rechte Seitenwand 7 sind drei Öffnungen eingearbeitet, in die jeweils einer der Druckmesssensoren 5 eingesetzt ist. Die Druck- und Temperaturmesssensoren 5 und 6 liegen jeweils auf einer gemeinsamen Achse, die fluchtend zu der Längsachse 3 des Durchlasskanales 4 verläuft, so dass über die nahezu gesamte Länge des Durchlasskanales 4 die Druck- und Temperaturzustände der eingepressten Massen feststellbar sind.

Im Bereich der Eintrittsöffnung 12 des Durchlasskanales 4 ist ein Ringgehäuse 21 als Bestandteil der Messvorrichtung 1 vorgesehen. Das Ringgehäuse 21 weist einen rechteckförmigen Einlasskanal 24 auf, der zu dem Durchlasskanal 4 fluchtend angeordnet ist und somit kann die eingepresste Masse durch den Einlasskanal 24 des Ringgehäuses 21 im montierten Zustand in den variabel einstellbaren Durchlasskanal 4 einströmen.

Zudem weist das Ringgehäuse 21 zwei parallel zueinander verlaufende Anlageflächen 30 auf, die senkrecht zu der Längsachse 3 des Durchlasskanales angeordnet sind und in die jeweils vier Gewindeöffnungen 23 eingearbeitet sind. An den beiden Seitenwänden 7 und 8 sind jeweils vier senkrecht von diesen abstehende Schrauben 18 vorgesehen, die im montierten Zustand in die Gewindeöffnungen 23 eingreifen, so dass die Seitenwände 7 und 8 an dem Ringgehäuse 21 fixiert sind. Folglich entsteht zwischen den Seitenwänden 7, 8 und dem Ringgehäuse 21 im montierten Zustand keine Relativbewegung und die Geometrie, insbesondere die Abmessung zwischen den zwei parallel zueinander verlaufenden Anlageflächen 30 des Ringgehäuses 31 bilden den Abstand der Seitenwände 7 und 8.

Zur Anlenkung der oberen und unteren Abdeckplatten 14, 15 ist zwischen dem Ringgehäuse 21 und den Abdeckplatten 14, 15 jeweils ein Gelenkflansch 22 vorgesehen, der in den Figuren 1 a, 2a, 2b, 3 und 3b abgebildet ist. In die oberhalb und unterhalb des Einlasskanales 24 verlaufende Seitenwand des Ringgehäuses 21 sind vier Niveauregulierungsöffnungen 25 eingearbeitet, die seitlich versetzt zueinander angeordnet sind und jeweils einen bestimmten Abstand zu der Längsachse 3 des Durchlasskanales 4 aufweisen. In den Gelenkflansch 22 sind vier Durchgangsöffnungen 28 eingearbeitet; eine der Durchgangsöffnungen 28 kann dabei fluchtend zu einer der Niveauregulierungsöffnungen 25 gebracht werden. Sobald diese Paarung erreicht ist, kann der Gelenkflansch 22 mittels eines Passstiftes 27 an dem Ringgehäuse befestigt werden. Jede Paarung von Niveauregulierungsöffnungen 25 und Durchgangsöffnungen 28 erzeugen einen unterschiedlichen Abstand des Gelenkflansches 22 zu der Längsachse 3 des Durchlasskanales 4, wodurch der Eintrittsquerschnitt des Durchlasskanals 4 variabel in vier verschiedenen Positionen einstellbar ist.

Darüber hinaus ist an dem Gelenkflansch 22 ein senkrecht zu der Längsachse 3 des Durchlasskanales 4 verlaufender Gelenkbolzen 26 vorgesehen. Jede der beiden Abdeckplatten 14 oder 15 weist einen Gelenkbolzen 19 auf, an der eine halbkreisförmige Einkerbung 20 eingearbeitet ist. Im montierten Zustand der Abdeckplatten 14, 15 an dem Gelenkbolzen 26 umgreift folglich die Einkerbung 20 den Gelenkbolzen 26, so dass die Abdeckplatten 14 und 15 verschwenkbar an dem Gelenkbolzen 26 abgestützt sind.

Insbesondere aus den Figuren 1 a, 2a und 2b ist ersichtlich, dass die jeweilige Abdeckplatte 14, 15 zwischen den beiden Seitenwänden 7 und 8 mittels vier oberen und unteren Spannstiften 16 eingespannt ist. Die jeweilige Seitenwand 7 und 8 weist dabei die beiden Anformungen 29 auf, durch die der Durchlasskanal 4 seitlich verschlossen ist und deren Abstand zueinander durch die ober- und unterhalb der Anformung 29 vorgesehenen Druckplatten konstant gehalten ist. Die Seitenwände 7 und 8 sind zudem an dem Ringgehäuse 21 ortsfest arretiert. Die Anformung 29 der jeweiligen Seitenwand 7 und 8 sowie die obere und untere Messplatte 11, deren Abstand zu der Längsachse 3 des Durchlasskanales 4 variabel einstellbar ist, bilden demnach die Seitenwände des Durchlasskanales 4. In die Seitenwände 7 und 8 sind außerhalb der Anformung 29 Durchgangsöffnungen vorgesehen, in denen einer der Spannstifte 16 eingesetzt ist, so dass die Seitenwände 7 und 8 mit Hilfe der Spannstifte 16 verspannt sind, wodurch die Abdeckplatten 14 und 15 und die daran befestigte Messplatte 11 zwischen den Anformungen 29 eingespannt sind. Die Spannstifte 16 behindern demnach die Verstellmöglichkeiten der Abdeckplatte 14 und 15 bzw. der Messplatte 11 nicht, da diese außerhalb des Bewegungsbereiches der Abdeckplatten 14 und 15 und der Messplatte 11 liegen.

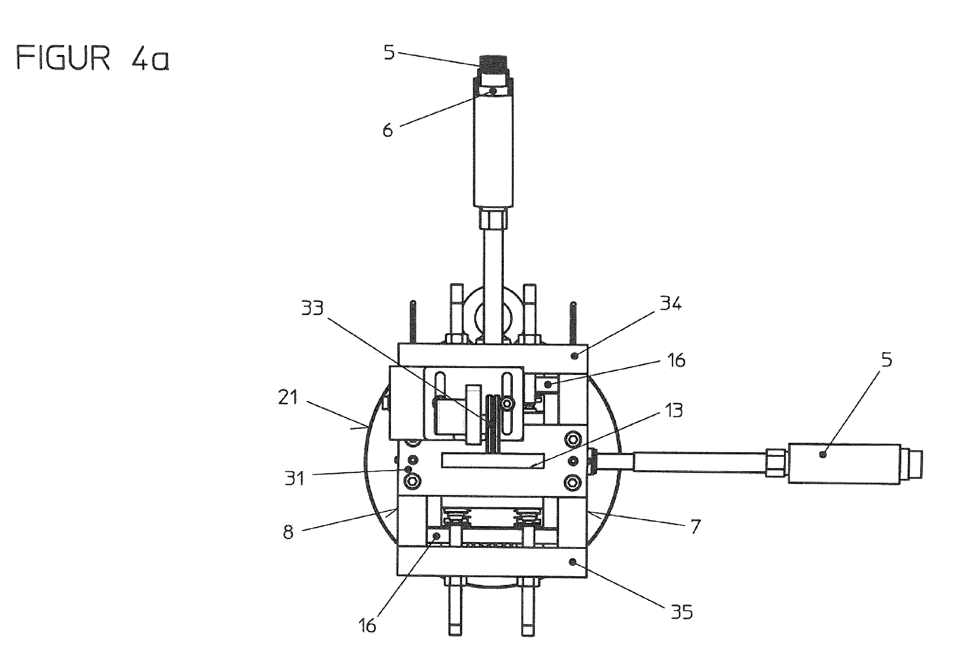

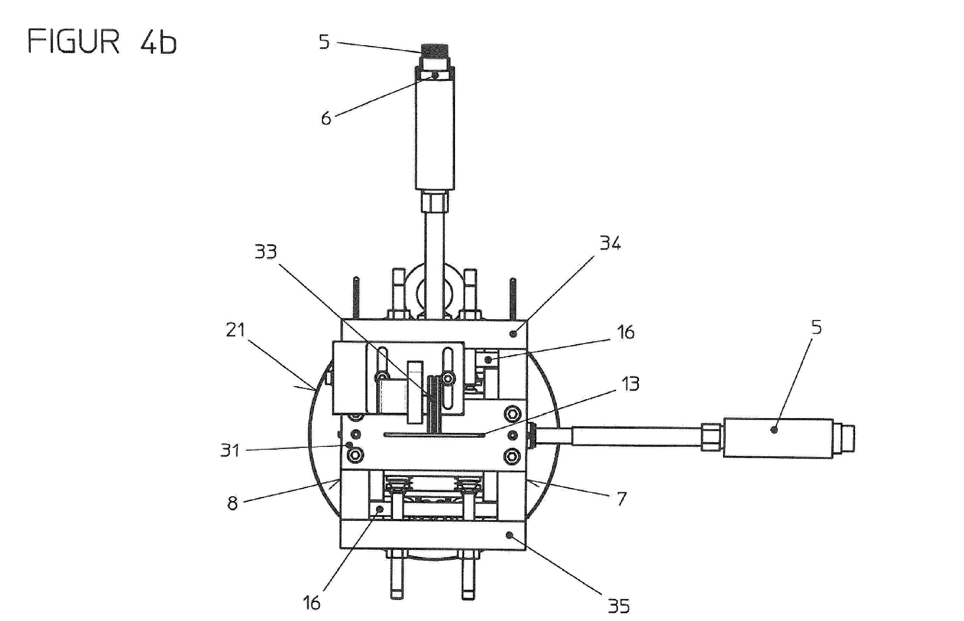

Im Bereich der Austrittsöffnung 13 des Durchlasskanales 4, wie dies in den Figuren 4a und 4b gezeigt ist, ist ein Rahmengestell 31 vorgesehen, an dem zwei in Richtung des Durchlasskanales 4 abstehende Anlagestege 32 angeformt sind. Das Rahmengestell 31 ist dabei fest an den beiden Seitenwänden 7 und 8 befestigt und es sind unterschiedliche Rahmengestelle 31 vorhanden, in denen jeweils eine unterschiedlich groß bemessene und rechteckförmige Austrittsöffnung 34 eingearbeitet ist. Zudem weisen die beiden Anlagestege 32 unterschiedliche Abstände zueinander auf.

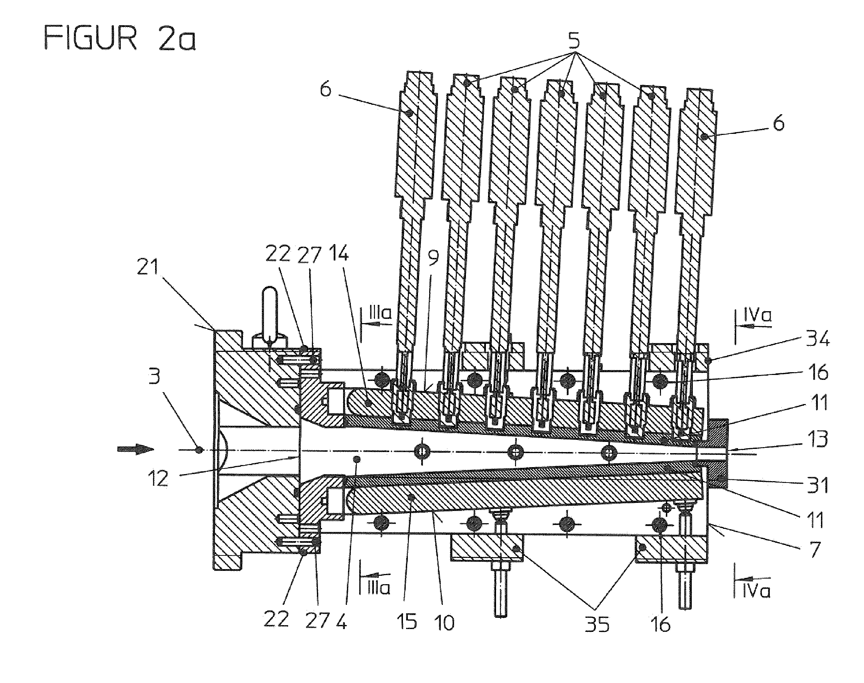

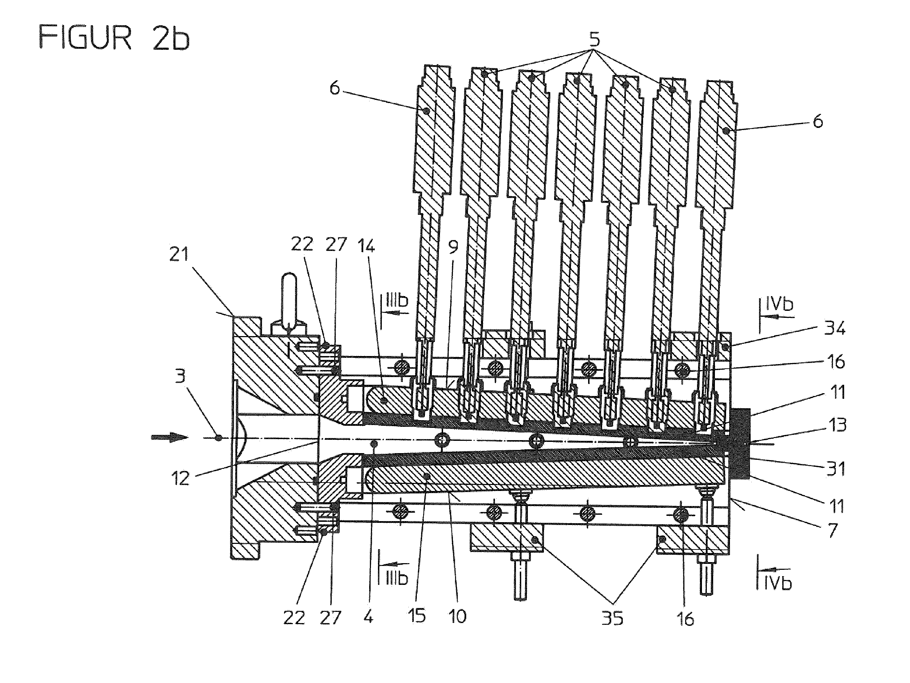

Insbesondere den Figuren 2a und 2b ist zu entnehmen, dass durch das Rahmengestell 31 sowohl der Durchtrittsquerschnitt des Durchlasskanales 4 im Bereich dessen Austrittsöffnung 13 einstellbar ist, sondern auch die Neigung der Abdeckplatte 14, 15 und folglich ist diese damit verbundene Messplatte 11 in ihrer Neigung bezogen auf die Längsachse 3 einstellbar, denn diese ist an den Anlagestegen 32 abgestützt. Da jede der Abdeckplatten 14, 15 verschwenkbar an dem Gelenkbolzen 26 des Gelenkflansches 22 gehalten ist, kann durch ein Auswechseln des Rahmengestelles 31 die Neigung der jeweils eingesetzten Messplatte 11 verändert werden. Durch die unterschiedlichen Höhenniveaus der Niveauregulierungsöffnungen 25 und der sich einstellenden Paarung mit der jeweiligen Durchgangsöffnung 28 des Gelenkflansches 22 kann der Eintrittsquerschnitt der Eintrittsöffnung 12 des Durchlasskanales 4 verändert werden, ohne dass zeitaufwendige Umrüstungsmaßnahmen erforderlich sind. Da sowohl die Abdeckplatten 14, 15 als auch die Messplatten 11 an den Anlagestegen 32 gehalten sind, deren Abstand zueinander kleiner bemessen ist als der Abstand der Abdeckplatten 14, 15 im Bereich der Eintrittsöffnung 11 des Durchlasskanales 4, verjüngt sich der Durchlasskanal 4 von der Eintrittsöffnung 12 zu der Austrittsöffnung 13. Dabei kann die Neigung der oberen und unteren Messplatte 11 unterschiedlich ausgewählt werden, wenn nämlich die Position des Gelenkflansches 22 an dem Ringgehäuse 21 in einer andersartigen Paarung von Niveauregulierungsöffnung 25 und Durchgangsöffnung 28 eingestellt ist.

Die Messplatten 11 sind im Bereich der jeweiligen Drucksensoren 5 verjüngt, so dass sich diese bei entsprechendem Innendruck, erzeugt durch die eingepressten Massen, in Richtung der Drucksensoren 5 wölben, wodurch der Druckzustand im Bereich der Druckmesssensoren 5 verändert ist.

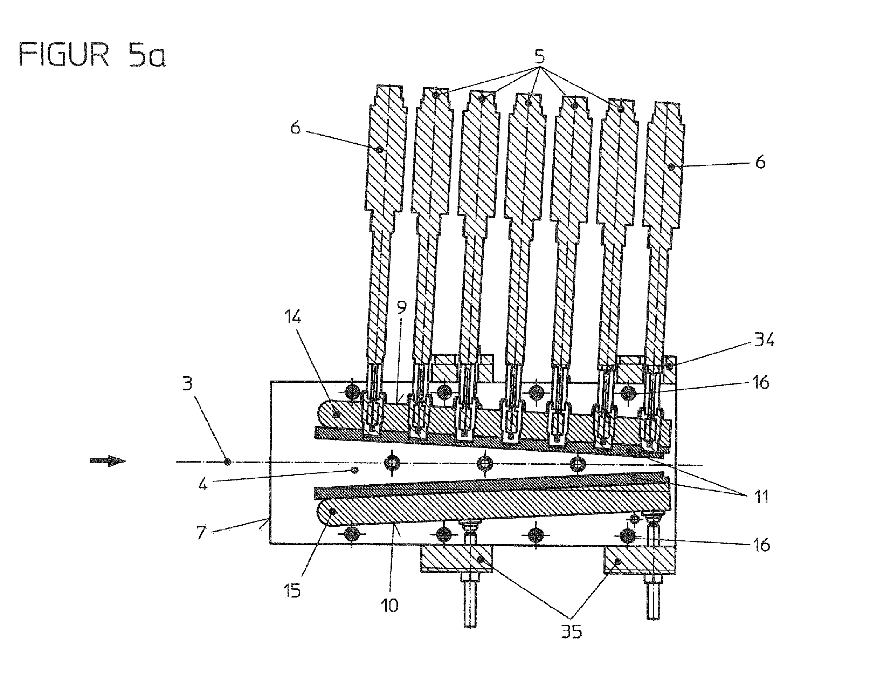

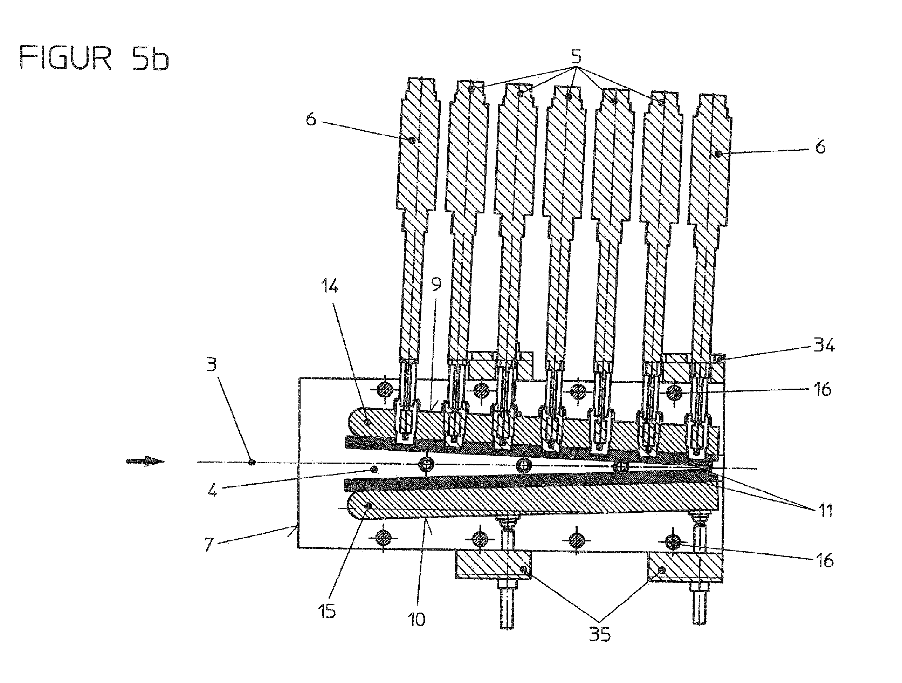

In den Figuren 5a und 5b ist eine andersartige Ausgestaltung des Messkörpers 2 ersichtlich. Die obere und untere Abdeckplatte 14, 15 ist zwischen den Seitenwänden 7 und 8 verspannt und wird mittels den bereits in den Figuren 1 a bis 4b erläuterten Befestigungsmaßnahmen an dem Ringgehäuse 21 und dem Rahmengestell 31 gehalten. Durch unterschiedlich ausgestaltete Messplatten 11' kann der Durchtrittsquerschnitt des Durchlasskanales 4 verändert werden, indem nämlich die Wandstärken der Messplatten 11' unterschiedlich groß bemessen sind.

An dem Messkörper 2 ist im Bereich der Austrittsöffnung 13 ein Messrad 33 angebracht, durch das der Volumenstrom der austretenden Massen erfasst, wie dies insbesondere in Figur 1 b zu entnehmen ist.

Auch an dem Ringgehäuse 21 kann ein derartiges Messrad angebracht sein, wodurch der Volumenstrom im Bereich der Eintrittsöffnung 12 des Durchlasskanales 4 ermittelbar ist.

Mit Hilfe der Temperatur- und Druckwerte im Inneren des Durchlasskanales 4 sowie den ein- und austretenden Volumenströmen der Masse können Messwerte in SI-Einheiten ermittelt werden, die eine Datenmenge für eine bestimmte bekannte viskoplastische Masse ergeben, wenn nämlich unterschiedliche Positionen und Neigungswinkel der jeweiligen Messplatte 11 bzw. 11' eingestellt werden. Auf der Grundlage der derart gewonnenen Messwerte in SI-Einheiten sind Berechnungsmodelle möglich, die zur Berechnung bzw. der konstruktiven Auslegung von Extrusionswerkzeugen einsetzbar sind. Demnach können für jede viskoplastische Masse in unterschiedlichen Anwendungsgebieten, beispielsweise in der Lebensmittelindustrie zur Verarbeitung von Lebensmittelteig, in der Klebstoffindustrie für Klebstoff schmelzen oder in der Ziegelindustrie zur Verarbeitung von keramischen Massen verwendet werden.

## Patentansprüche

1. Messvorrichtung (1) zur Bestimmung des Fließverhaltens von viskoplastischen Massen, insbesondere von keramischen Massen, Lebensmittel-Teig, Klebstoffen oder Kohlestoffschmelzen, die im Strangpressverfahren durch ein Extrusionswerkzeug, insbesondere Mundstück, zur Herstellung von plastisch verformten Körpern gepresst sind, bestehend aus einem Messkörper (2), in dem ein sich in Längsrichtung (3) des Messkörpers (2) erstreckender und im Querschnitt rechteckförmig ausgestalteter Durchlasskanal (4) vorgesehen ist, in den mindestens ein Messsensor (5, 6) einmündet, der mit den in den Durchlasskanal (4) eingeschobenen Massen zur Ermittlung von Messwerten kommuniziert,
**dadurch gekennzeichnet,**
**dass** mindestens eine der Seitenwände (9 und/oder 10) des Durchlasskanals (4) durch eine Messplatte (11, 11') gebildet ist, dass der Durchlasskanal (4) durch die Messplatte (11, 11') in Richtung der Austrittsöffnung (13) des Durchlasskanals (4) verjüngt ist und dass der Abstand mindestens einer der Messplatten (11, 11') in Richtung der Längsachse (3) des Durchlasskanals (4) variabel veränderbar ist.

2. Messvorrichtung nach Anspruch 2,
**dadurch gekennzeichnet,**
**dass** die Steigung mindestens einer der Messplatten (11, 11') bezogen auf die Längsachse (3) des Durchlasskanals (4) in unterschiedliche Neigungswinkel einstellbar ist.

3. Messvorrichtung nach Anspruch 1 oder 2,
**dadurch gekennzeichnet,**
**dass** der Messkörper (2) aus zwei gegenüberliegenden Seitenwänden (7, 8) gebildet ist, die im montierten Zustand einen vorgebenen und konstanten Abstand zueinander einnehmen, dass zwischen den beiden Seitenwänden (7, 8) zwei zueinander beabstandete Abdeckplatten (14, 15) angeordnet sind, die mit Hilfe von mindestens zwei Spannstiften (16) zwischen den beiden Seitenwänden (7, 8) verspannt gehalten sind, dass jeweils eine der Abdeckplatten (14, 15) einer der Messplatten (11) zugeordnet ist, die über Passstifte (17) an der Abdeckplatte (14, 15) gehalten sind, und dass die beiden Seitenwände (7, 8) mindestens zwei senkrecht von diesen abstehenden Schrauben (18) aufweisen, die jeweils in eine in einem Ringgehäuse (21) eingearbeiteten Gewindeöffnungen (23) im montierten Zustand eingedreht sind.

4. Messvorrichtung nach Anspruch 3,
**dadurch gekennzeichnet,**
**dass** in dem Ringgehäuse (21) mindestens zwei Niveauregulierungsöffnungen (25) eingearbeitet sind, die versetzt zueinander in unterschiedlichen Abständen zu der Längsachse (3) verlaufen.

5. Messvorrichtung nach Anspruch 2, 3 oder 4,
**dadurch gekennzeichnet,**
**dass** zwischen dem Ringgehäuse (21) und jeder Messplatte (11) und Abdeckplatte (14, 15) ein Gelenkflansch (22) angeordnet ist und dass an dem Gelenkflansch (22) ein senkrecht zur Längsachse (3) des Messkörpers (2) verlaufender Gelenkbolzen (26) befestigt ist, an dem die Abdeckplatte (14, 15) angelenkt ist.

6. Messvorrichtung nach Anspruch 5,
**dadurch gekennzeichnet,**
**dass** die Abdeckplatte (14, 15) einen Gelenkbolzen (19) aufweist, an dem eine Einkerbung (20) angearbeitet ist, die den Gelenkbolzen (26) teilweise umgreift.

7. Messvorrichtung nach Anspruch 5 oder 6,
**dadurch gekennzeichnet,**
**dass** in den Gelenkflansch (2) mindestens zwei Durchgangsöffnungen (28) eingearbeitet sind, in die ein Passstift (27) diese durchgreifend eingesetzt ist, und dass mindestens eine der Durchgangsöffnungen (28) fluchtend zu einem der in dem Ringgehäuse (21) eingearbeiteten Niveauregulierungsöffnungen (25) derart verläuft, dass eine Paarung von Durchgangsöffnungen (28) und Niveauregulierungsöffnungen (25) entsteht, durch die der Passstift (27) zur Fixierung des Gelenkflansches (22) an dem Ringgehäuse (21) einsteckbar ist.

8. Messvorrichtung nach Anspruch 7,
**dadurch gekennzeichnet,**
**dass** jede Paarung von Durchgangsöffnungen (28) und Niveauregulierungsöffnungen (25) des Gelenkflansches (22) und des Ringgehäuses (21) eine unterschiedliche Höhenposition des Gelenkflansches (22) bezogen auf die Längsachse (3) des Durchlasskanales (4) erzeugen.

9. Messvorrichtung nach Anspruch 7 oder 8,
**dadurch gekennzeichnet,**
**dass** durch die ausgewählte Paarung von Niveauregulierungsöffnungen (25) und Durchgangsöffnungen (28) des Gehäuserings (21) und des Gelenkflansches (22) der Eintrittsquerschnitt des Durchlasskanals (4) durch die entstehende Position der Abdeckplatte (14, 15) einstellbar ist.

10. Messvorrichtung nach einem der vorgenannten Ansprüche,
**dadurch gekennzeichnet,**
**dass** an dem Messkörper (2) ein im Bereich der Austrittsöffnung (13) des Durchlasskanals (4) angebrachtes Rahmengestell (31) arrtiert ist, durch das der Austrittsquerschnitt des Durchlasskanals (4) veränderbar ist und durch das die Messplatte (11) oder Messplatten (11) mittels zwei zueinander beabstandet und parallel verlaufender Auflagestege (32) definiert in einer vorgegebenen Position gehalten ist bzw. sind.

11. Messvorrichtung nach Anspruch 1,
**dadurch gekennzeichnet,**
**dass** in den Durchlasskanal (4) des Messkörpers (2) eine oder mehrere Messplatten (11') einsetzbar ist bzw. sind, die unterschiedliche Wandstärken, aufweisen, und dass der Innenquerschnitt, der von der oder den Messplatte (11) bzw. Messplatten (11') gebildet ist, unterschiedlich groß bemessene Querschnitte in Abhängigkeit von den eingesetzten Messplatten (11') aufweist.

12. Messvorrichtung nach einem der vorgenannten Ansprüche,
**dadurch gekennzeichnet,**
**dass** der Volumenstrom der in die Messvorrichtung (1) ein- und/oder ausgeführten Massen mittels eines rotierbaren Rades (32) gemessen ist, das an dem Messkörper (2) befestigt ist.

13. Messvorrichtung nach einem der vorgenannten Ansprüche,
**dadurch gekennzeichnet,**
**dass** durch die Messsensoren (5, 6) der Druck und/oder die Temperatur der durch die Messvorrichtung (1) gepressten Massen ermittelbar ist.

14. Messvorrichtung nach einem der vorgenannten Ansprüche,
**dadurch gekennzeichnet,**
**dass** jede Messplatte (11, 11') auswechselbar ist und dass die Oberfächenbeschaffenheit und/oder der Werkstoff der jeweiligen Messplatte (11, 11') unterschiedlich ausgestaltet ist und dass auf die beiden Seitenwände (7, 8) eine plane Anformung (29) vorgesehen ist, durch die der Durchlasskanal (4) seitlich begrenzt ist und auf denen die Abdeckplatten (14, 15) bzw. die Messplatten (11, 11') verspannt gehalten sind.

15. Messovrrichtung nach einem der vorgenannten Ansprüche,
**dadurch gekennzeichnet,**
**dass** der Abstand der Messplatte (11) zu der Längsachse (4) im Bereich der Eintrittsöffnung (12) größer bemessen ist als im Bereich der Austrittsöffnung (13).
